# EUROPÄISCHE PATENTSCHRIFT

(11) **EP 3 084 381 B1**
(45) Veröffentlichungstag und Bekanntmachung des Hinweises auf die Patenterteilung: **04.09.2019**
(21) Anmeldenummer: 14796784.8
(22) Anmeldetag: 14.11.2014
(51) Int. Cl.: G01L 9/14, G01L 9/00, G01L 19/14

(54) **DRUCKSENSOR**
PRESSURE SENSOR
CAPTEUR DE PRESSION

(30) Priorität: 18.12.2013 DE 102013114407
(43) Veröffentlichungstag der Anmeldung: 26.10.2016
(73) Patentinhaber: Endress+Hauser SE+Co. KG, 79689 Maulburg (DE)
(72) Erfinder: BECHER, Raimund, 79238 Ehrenkirchen (DE); THAM, Anh Tuan, 14089 Berlin (DE); ROSSBERG, Andreas, 79713 Bad Säckingen (DE); SCHMIDT, Elke, 79713 Bad Säckingen (DE)
(74) Vertreter: Andres, Angelika Maria
(86) Internationale Anmeldenummer: PCT/EP2014/074618
(87) Internationale Veröffentlichungsnummer: WO 2015/090757

(56) Entgegenhaltungen:
- US-A- 5 939 639
- US-A1- 2001 015 105
- US-A1- 2011 160 609

## Beschreibung

Die Erfindung betrifft einen Drucksensor und eine mit einem Drucksensor ausgestattete Druckmessanordnung.

Drucksensoren werden zur messtechnischen Erfassung von zu messenden Drücken in Druckmessanordnungen in nahezu allen Bereichen der industriellen Messtechnik eingesetzt.

Beispielsweise ist aus dem Stand der Technik das US Patent Nr. 2011/0160609 oder US Patent Nr. 5 939 639 bekannt geworden, welches sich allgemein auf kapazitive Druckwandler vom Membrantyp bezieht. Ferner ist aus dem Stand der Technik die US 2001/015105 A1 bekannt geworden, welche einen mechanischen Sensor, wie beispielsweise einen kapazitiven Drucksensor, offenbart, der eine auslenkbare Komponente umfasst, die aus einer mit einem niedrigen Young-Modul aufweisenden Legierung auf Titanbasis ausgebildet ist.

Ferner werden heute häufig so genannte Halbleiter-Sensoren, z.B. Drucksensor-Chips auf Siliziumbasis, eingesetzt. Diese Drucksensoren sind jedoch mechanisch empfindlich. Sie können daher nicht unmittelbar dem Medium, dessen Druck gemessen werden soll, ausgesetzt werden. Stattdessen wird dem Drucksensor ein Druckmittler vorgeschaltet, über den der zu messende Druck auf den Drucksensor übertragen wird. Druckmittler sind mit einer Druck übertragenden Flüssigkeit, z.B. einem Öl, gefüllt. Da die Druck übertragende Flüssigkeit bei tiefen Temperaturen gefriert, können diese Drucksensoren nur bei Temperaturen eingesetzt werden, die weit oberhalb des Gefrierpunkts der verwendeten Flüssigkeit liegen. Hierdurch ist der Einsatz dieser Drucksensoren auf Anwendungen beschränkt, bei denen nur Temperaturen oberhalb einer von der Wahl der Flüssigkeit abhängigen Mindesttemperatur, in der Regel oberhalb von - 70° C, auftreten.

Extrem tiefe Temperaturen unterhalb von - 70°C treten in Spezialanwendungen, z.B. in Anlagen zur Erdgasverflüssigung, sowie zum Transport verflüssigter Erdgase, auf. Dort können Temperaturen von bis zu
- 165°C auftreten.

Für die Messung von Drücken bei Temperaturen unterhalb von - 70°C, kommen daher grundsätzlich nur - häufig als trockene Sensoren bezeichnete - Drucksensoren in Frage, die ohne den Einsatz von Druck übertragenden Flüssigkeiten betrieben werden können.

Ein Beispiel für trockene Drucksensoren sind keramische Drucksensoren, mit einer auf einem zylindrischen keramischen Grundkörper von diesem beabstandet angeordneten keramischen Messmembran gleichen Durchmessers. Keramische Drucksensoren bieten den Vorteil, dass die keramische Messmembran unmittelbar dem Medium ausgesetzt werden kann. Keramik weist insoweit für die Anwendung in der Druckmesstechnik besonders vorteilhafte chemische und mechanische Eigenschaften auf. Keramische Drucksensoren müssen am Einsatzort montiert werden. Hierzu werden sie regelmäßig in ein mit einem Prozessanschluss ausgestattetes Sensorgehäuse eingesetzt, in dem ein äußerer Rand von Messmembran und Grundkörper in axialer Richtung - also parallel zu einer Flächennormale auf die Messmembran - eingespannt ist. Um mechanische Verspannungen innerhalb des Drucksensors, insb. im Bereich der Messmembran, zu vermeiden, werden die Drucksensoren unter Zwischenfügung von Elastomeren in das Sensorgehäuse eingespannt. Elastomere versagen jedoch bei den genannten tiefen Temperaturen ihren Dienst. Dementsprechend ist der Einsatz dieser keramischen Drucksensoren ebenfalls auf Temperaturen oberhalb von - 70°C begrenzt.

Ein weiteres Beispiel für einen trockenen Drucksensor ist in der DE 10 2006 035 230 A1 beschrieben. Dieser Drucksensor weist einen Saphirträger mit darin eingebrachten, zu einer Widerstandsbrücke zusammen geschalteten piezoresistiven Silizium-Sensoren auf. Der Saphirträger ist auf einer Innenseite einer als Messmembran eingesetzten Titanronde aufgebracht. Im Messbetrieb wird die Außenseite der Titanronde unmittelbar mit dem zu messenden Druck beaufschlagt, und deren druckabhängige Durchbiegung mittels der Silizium-Sensoren messtechnisch erfasst. Die Titanronde ist frontbündig in einen Membranträger aus Titan eingesetzt, der wiederum in eine Halterung aus einem Edelstahl einsetzt ist, die frontbündig in einen Prozessanschluss aus einem Edelstahl eingefasst ist. Der Membranträger dient dazu, Spannungen, die durch die unterschiedlichen thermischen Ausdehnungskoeffizienten der Messmembran aus Titan und der Halterung aus Edelstahl, sowie des Prozessanschlusses aus Edelstahls entstehen können, aufzunehmen. Hierzu weist der Membranträger auf dessen in den Drucksensors hinein weisenden Innenseite eine ringförmig umlaufende Ausnehmung auf. Der Membranträger ist damit in der Lage, die Messmembran auch bei raschen Temperaturwechseln vor Verspannungen zu schützen. Das kann er jedoch nur, solange er selbst aufgrund der Ausnehmung noch elastisch genug ist, um die durch die unterschiedlichen thermischen Ausdehnungen verursachten Kräfte aufzunehmen. Diese Kräfte sind umso größer, je niedriger die Temperatur ist. Parallel dazu ist die Elastizität von Titan umso niedriger, je geringer die Temperatur ist. Der Membranträger ist somit umso schlechter in der Lage, diese Kräfte aufzunehmen, je niedriger die Temperatur ist, bei der er eingesetzt ist.

Bei trockenen Drucksensoren wirft die möglichst verspannungsfreie Montage des Drucksensors bzw. der Messmembran am Einsatzort bei tiefen Temperaturen erhebliche Probleme auf.

Es ist eine Aufgabe der Erfindung, einen Drucksensor, sowie eine mit einem Drucksensor ausgestatte Druckmessanordnung anzugeben, der bzw. die bei tiefen Temperaturen, insb. bei Temperaturen unterhalb von - 70°C, einsetzbar ist.

Hierzu umfasst die Erfindung einen Drucksensor, mit
- einem massiven metallischen Sensorkörper, mit einem Frontbereich und einen daran anschließenden Sockel,
   -- dessen Frontbereich eine größere Querschnittsfläche aufweist als der Sockel, und
   -- dessen Frontbereich einen äußeren zur Montage des Drucksensors an einem Einsatzort mittels einer Befestigungsvorrichtung einspannbaren äußeren Rand aufweist,
- einer im Frontbereich vorgesehenen, zu einer vom Sockel abgewandten Frontseite des Frontbereichs hin geöffneten Ausnehmung,
- einer im Messbetrieb von außen mit einem zu messenden Druck zu beaufschlagenden, druckabhängig elastisch verformbaren, auf der Frontseite des Sensorkörpers angeordneten, die Ausnehmung nach außen abschließenden metallischen Messmembran,
   -- die aus dem gleichen Metall besteht wie der Sensorkörper, und
   -- die vom äußeren Rand des Frontbereichs beabstandet ist, und
- einem elektromechanischen Wandler zur messtechnischen Erfassung der druckabhängigen Verformung der Messmembran, mit mindestens einem durch einen Isolator elektrisch gegenüber der Messmembran und dem Sensorkörper isolierten Messelement.

### Erfindungsgemäß

- ist der Isolator ein in die Ausnehmung eingesetzter, insb. ein mittels einer Aktivhartlotverbindung in der Ausnehmung verankerter, Körper, dessen der Messmembran zugewandte Stirnseite parallel zur Messmembran verläuft, und von dieser beabstandet ist, und
- ist eines der Messelemente eine auf der Stirnseite des Isolators aufgebrachte Messelektrode, die zusammen mit der als Gegenelektrode dienenden Messmembran einen Kondensator bildet, der eine von der druckabhängigen Durchbiegung der Messmembran abhängige Kapazität aufweist.

Gemäß einer ersten Weiterbildung ist auf der Frontseite des Sensorkörpers zwischen der Messmembran und dem äußeren Rand eine die Messmembran allseitig umschließende Nut vorgesehen.

Gemäß einer zweiten Weiterbildung weist der Frontbereich auf der Frontseite des äußeren Randes eine die Messmembran allseitig umschließende, von der Messmembran beabstandete, und nach außen vorstehende metallische Dichtlippe einer metallischen Schneidringdichtung auf.

Gemäß einer dritten Weiterbildung besteht die Messmembran aus einem Metall, insb. aus Titan, Tantal, einer Titanlegierung oder einer Tantallegierung, das in einem Temperaturen unterhalb von - 70°C umfassenden Temperaturbereich, in dem der Drucksensor einsetzbar ist, insb. einem Temperaturbereich von - 165°C bis - 70°C, eine prozentuale Dehnung größer gleich 10% aufweist.

Gemäß einer Ausgestaltung der Erfindung oder der dritten Weiterbildung besteht der Isolator aus einem Material, insb. aus Keramik oder aus Saphir, das in einem Temperaturen unterhalb von - 70°C umfassenden Temperaturbereich, in dem der Drucksensor einsetzbar ist, insb. einem Temperaturbereich von - 165°C bis - 70°C, einen an den thermischen Ausdehnungskoeffizienten des Metalls von Sensorkörper und Messmembran angepassten thermischen Ausdehnungskoeffizienten aufweist.

### Gemäß einer Ausgestaltung der Erfindung

- weist der Isolator auf dessen der Messmembran zugewandten Stirnseite ein ein Membranbett für die Messmembran bildendes Wellenprofil aus konzentrisch zur Mitte der Messmembran angeordneten Wellen auf, und
- ist die Messmembran als Wellmembran ausgebildet, die ein zum Wellenprofil des Isolators formgleiches, insb. durch Abprägen der Messmembran auf dem Membranbett hergestelltes, Wellenprofil aufweist.

### Gemäß einer zweiten Variante der Erfindung

- ist der Isolator eine auf einer in die Ausnehmung hineinweisenden Innenseite der Messmembran angeordnete flächig mit der Messmembran verbundene Scheibe, und
- die Messelemente sind auf der von der Messmembran abgewandten Seite des Isolators in den Isolator eingesetzte Sensoren, insb. piezoresistive Silizium-Sensoren.

### Gemäß einer bevorzugten Ausgestaltung der zweiten Variante

- besteht der Isolator aus Saphir, und
- die flächige Verbindung von Isolator und Messmembran ist eine Hartlotverbindung.

### Gemäß einer vierten Weiterbildung der Erfindung

- ist auf der von der Messmembran abgewandten Seite des Isolators mindestens ein an mindestens eines der Messelemente angeschlossener Kontakt vorgesehen,
- ist an jeden Kontakt eine Anschlussleitung angeschlossen,
- ist im Sensorkörper für jede Anschlussleitung eine durch den Sockel verlaufende in der Ausnehmung mündende Bohrung vorgesehen,
- ist in jede Bohrung ein die Bohrung auskleidendes Röhrchen aus einem Isolator, insb. aus Keramik oder aus Saphir, eingesetzt, und
- ist jede Anschlussleitung durch eines der Röhrchen hindurch geführt.

Gemäß einer Ausgestaltung der vierten Weiterbildung sind die Anschlussleitungen jeweils mittels einer Weichlötung oder durch Bonden an den zugehörigen Kontakt angeschlossen.

Gemäß einer fünften Weiterbildung ist der elektromechanische Wandler über mindestens eine Anschlussleitung an eine von der Messmembran entfernt angeordnete Elektronik, insb. eine mit einer Heizung ausgestattete Elektronik, angeschlossen.

Weiter umfasst die Erfindung eine Druckmessanordnung mit einem erfindungsgemäßen Drucksensor, mit
- einem Anschlusselement, insb. einem Anschlussrohr, einem Anschlussstutzen oder einem Anschlussflansch,
   -- das eine zentrale, die Messmembran frei gebende Ausnehmung aufweist, und
- einer Befestigungsvorrichtung zur Befestigung des Drucksensors auf dem Anschlusselement,
   -- die ausschließlich auf dem äußeren Rand des Frontbereichs des Drucksensors aufliegt, und insb. ausschließlich parallel zur Flächennormale auf die Messmembran wirkende Kräfte auf den Rand ausübt.

Weiter umfasst die Erfindung eine Ausgestaltung der erfindungsgemäßen Druckmessanordnung mit einem Drucksensor gemäß der zweiten Weiterbildung, bei der
- das Anschlusselement in einem der Dichtlippe gegenüberliegenden Bereich eine zur Dichtlippe des Sensorkörpers komplementäre metallische Dichtungskontur aufweist,
- zwischen der Dichtlippe und der Dichtungskontur eine metallische Dichtung, insb. eine außenseitlich mit einer Beschichtung aus Polytetrafluorethylen beschichtete Dichtung, aus einem im Vergleich zum Metall der Dichtlippe und der Dichtungskontur duktileren Metall, insb. aus Gold oder aus Kupfer, angeordnet ist, und
- die Befestigungsvorrichtung einen von der Messmembran abgewandten Seite her auf den Drucksensor aufgeschobenen Überwurf aufweist, der mit dem Anschlusselement mittels einer Schraubverbindung verbunden ist.

Weiter umfasst die Erfindung eine alternative Ausgestaltung der erfindungsgemäßen Druckmessanordnung, bei der
- das Anschlusselement auf dessen dem äußeren Rand gegenüberliegenden Stirnseite eine ringförmig umlaufende Nut aufweist, und
- in der Nut eine ringförmig umlaufende Dichtfeder, insb. eine Dichtfeder mit einem im Schnitt c-förmigen Profil, aus einem federelastischen Metall, insb. einem außenseitlich mit einer Beschichtung aus Polytetrafluorethylen beschichten Metall, eingesetzt ist, und
- die Befestigungsvorrichtung einen von der Messmembran abgewandten Seite her auf den Drucksensor aufgeschobenen Überwurf aufweist, der mit dem Anschlusselement mittels einer Schraubverbindung verbunden ist.

Die erfindungsgemäßen Drucksensoren bieten den Vorteil, dass Messmembran und Sensorkörper aus dem gleichen Metall bestehen, und der Drucksensor durch eine axiale Einspannung des von der Messmembran beabstandeten äußeren Randes des Frontbereichs des massiven Sensorkörpers am Einsatzort montiert werden kann. Hierdurch ist es möglich, den Drucksensor bei tiefen Temperaturen, insb. bei Temperaturen im Bereich von - 165°C bis - 70°C, einzusetzen, ohne dass bei diesen Temperaturen durch die Einspannung des Drucksensors bedingte Verspannungen im Bereich der Messmembran die Messung beeinträchtigen.

Die Erfindung und deren Vorteile werden nun anhand der Figuren der Zeichnung, in denen drei Ausführungsbeispiele dargestellt sind, näher erläutert. Gleiche Elemente sind in den Figuren mit den gleichen Bezugszeichen versehen.
- Fig. 1 zeigt:: eine Druckmessanordnung mit einem Drucksensor mit einem kapazitiven elektromechanischen Wandler;
- Fig. 2 zeigt:: eine weitere Druckmessanordnung mit dem Drucksensor von Fig. 1; und
- Fig. 3 zeigt:: eine Druckmessanordnung mit einem Drucksensor mit einem piezoresistiven elektromechanischen Wandler.

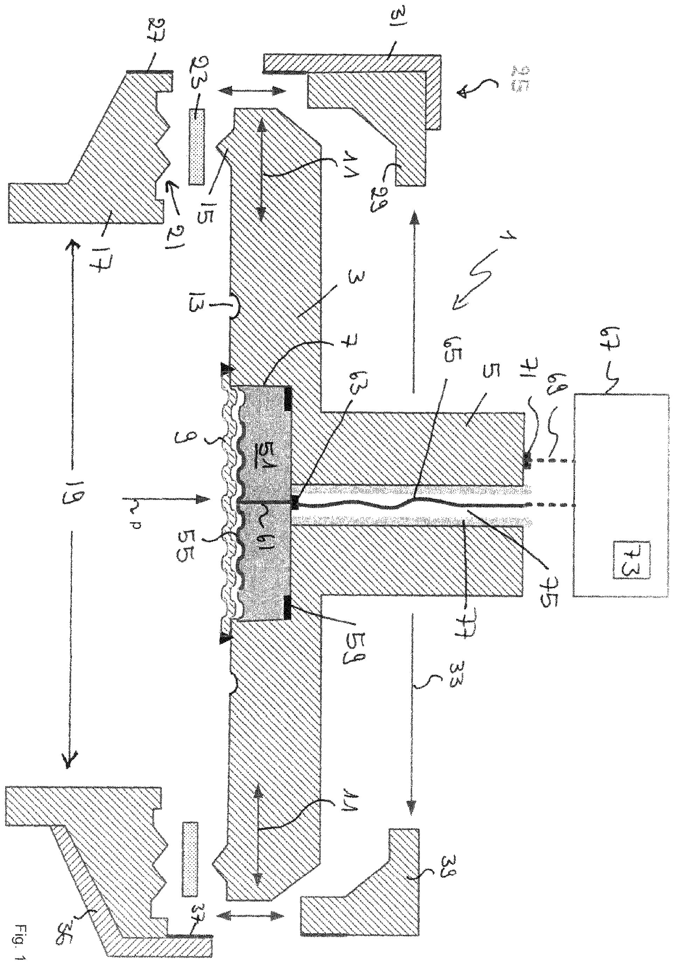

Fig. 1 zeigt einen Schnitt durch eine Explosionsdarstellung einer Druckmessordnung mit einen erfindungsgemäßen Drucksensor. Der Drucksensor umfasst einen massiven metallischen Sensorkörper 1, mit einem Frontbereich 3 und einem daran anschließenden parallel zur Längsachse des Drucksensors verlaufenden Sockel 5. Der Frontbereich 3 weist die Grundform einer Scheibe auf, durch deren Mitte die Längsachse des Drucksensors verläuft.

Im Frontbereich 3 des Sensorkörpers 1 ist mittig eine zu einer vom Sockel 5 abgewandten Frontseite des Frontbereichs 3 hin geöffnete Ausnehmung 7 vorgesehen, die bündig mit der Frontseite des Sensorkörpers 1 abschließt.

Auf der Frontseite des Drucksensors ist eine druckabhängig elastisch verformbare metallische Messmembran 9 angeordnet, die die Ausnehmung 7 vollständig überdeckt und nach außen abschließt. Dabei ist ein die Ausnehmung 7 außenseitlich umgebender äußerer Rand der Messmembran 9 durch eine Fügung, z.B. eine Elektronenstrahlschweißung, mit der Frontseite des Sensorkörpers 1 verbunden.

Damit die Messmembran 9 auch bei tiefen Temperaturen unterhalb von - 70°C, insb. in einem Temperaturbereich von - 165°C bis -70°C in ausreichendem Maße elastisch verformbar ist, wird hierzu ein Metall eingesetzt, das in diesem Temperaturbereich eine ausreichend hohe Elastizität, eine ausreichend hohe Streckgrenze und eine ausreichend hohe prozentuale Dehnung ε aufweist. Die prozentuale Dehnung ε bezeichnet das Verhältnis der Längenänderung, die ein Körper unter Zugspannung im Verhältnis zu dessen Ausgangslänge erfährt, und ist somit maßgeblich die Größe der messtechnisch zu erfassenden druckabhängigen Durchbiegung der Messmembran 9.

Während Elastizitätsmodul und Streckgrenze der genannten Metalle mit sinkender Temperatur ansteigen, und insoweit unkritisch sind, nimmt die prozentuale Dehnung ε mit sinkender Temperatur ab. Vorzugsweise wird eine Metall verwendet, das in dem Temperaturbereich, in dem der Drucksensor eingesetzt werden soll, eine prozentuale Dehnung ε größer gleich 10% aufweist.

Als Werkstoff für die Messmembran 9 eignen sich insoweit austenitische Edelstähle, Titan, Titanlegierungen, sowie Tantal und Tantallegierungen. Vorzugsweise besteht die Messmembran 9 aus Titan oder einer Titanlegierung.

Ein bevorzugtes Metall ist Titan mit dem Reinheitsgrad 2 (Grade 2 Titan). Grade 2 Titan weist bei Temperaturen größer gleich -165°C eine prozentuale Dehnung ε von größer gleich 18% auf. Eine Messmembran aus Grade 2 Titan mit einem Durchmesser von 15 mm und einer vergleichsweise großen Dicke von 0,4 mm erfährt bei einer Beaufschlagung mit einem Druck von 10 bar bei -165°C eine elastische Durchbiegung, bei der die Mitte der Messmembran um mehr als 10 µm ausgelenkt wird. Da bereits Membranauslenkungen in der Größenordnung von wenigen Mikrometern, insb. mehr als 2 µm, messtechnisch erfassbar sind, ist eine Durchbiegung von dieser Größenordnung ohne weiteres messtechnisch erfassbar.

Um durch unterschiedliche thermische Ausdehnungskoeffizienten bedingte Verspannungen der Messmembran 9 zu vermeiden, besteht der massive Sensorkörper 1 aus dem gleichen Metall wie die Messmembran 9. Damit treten auch dann keine durch thermische Ausdehnung bedingten Verspannungen zwischen Messmembran 9 und Sensorkörper 1 auf, wenn der Drucksensor einen sehr großen Temperaturbereich durchläuft.

Darüber hinaus sind Fügungen zwischen identischen Materialien qualitativ hochwertiger, und über die Temperatur mechanisch beständiger als Fügungen zwischen unterschiedlichen Materialien.

Im Messbetrieb wird eine von der Ausnehmung 7 abgewandte Außenseite der Messmembran 9 mit einem zu messenden Druck p beaufschlagt, und deren druckabhängige Verformung mittels eines elektromechanischen Wandlers erfasst. Hierzu ist der Drucksensor derart am Einsatzort zu montieren, dass auch bei tiefen Temperaturen, insb. bei Temperaturen unterhalb von -70 °C, keine die Messung beeinträchtigenden Verspannungen im Bereich der Messmembran 9 auftreten.

Hierzu weist der Frontbereich 3 des massiven Sensorkörpers 1 eine deutlich größere Querschnittsfläche auf als der daran anschließende Sockels 5, und der Frontbereich 3 umfasst einen äußeren - in den Figuren durch Doppelpfeile gekennzeichneten- Rand 11, der von der Messmembran 9 beabstandet ist.

Hierdurch wird bewirkt, dass der Drucksensor mittels einer Befestigungsvorrichtung in einer Druckmessanordnung an einem Einsatzort montiert werden kann, indem ausschließlich der äußere von der Messmembran 9 beabstandete Rand 11 des Frontbereichs 3 eingespannt wird. Die Befestigungsvorrichtung ist hierzu derart ausgestaltet, dass sie ausschließlich auf den äußeren Rand 11 einwirkt, und auf diesen vorzugsweise ausschließlich parallel zur Flächennormalen auf die Messmembran 9 wirkende Kräfte ausübt.

Die durch die Befestigungsvorrichtung auf den Drucksensor ausgeübte Krafteinwirkung ist hierdurch auf den von der Messmembran 9 beabstandeten äußeren Rand 11 des Frontbereichs 3 begrenzt. Dies bietet einen effektiven Schutz der Messmembran 9 vor Verspannungen. Dabei bewirkt bereits der räumliche Abstand zwischen der Messmembran 9 und dem eingespannten äußeren Rand 11 des Frontbereichs 3 eine mechanische Entkopplung. Diese ist umso wirksamer, je dicker der Frontbereich 3 ist, und je weiter der Rand 11 von der Messmembran 9 entfernt ist.

Die Entkopplung der Messmembran 9 von der mechanischen Einspannung des äußeren Randes 11 des Drucksensors kann noch weiter verbessert werden, indem auf der Frontseite des Frontbereich 3 eine die Messmembran 9 außenseitlich allseitig um gebende Nut 13 vorgesehen wird.

Damit können die erfindungsgemäßen Drucksensoren bei Temperaturen unterhalb von - 70°C eingesetzt werden, ohne dass bei diesen Temperaturen durch die Einspannung des Drucksensors bedingte Verspannungen der Messmembran 9 die Messung beeinträchtigen.

Um mittels der Befestigungsvorrichtung eine bei tiefen Temperaturen druckdichte Einspannung des äußeren Randes 11 des Drucksensors zu bewirken, ist auf der Frontseite des äußeren Randes 11 des Frontbereichs 3 des Sensorkörpers 1 vorzugsweise eine nach außen parallel zur Längsachse des Drucksensors vorstehende metallische Dichtlippe 15 einer metallischen Schneidringdichtung vorgesehen. Die Dichtlippe 15 umschließt die Messmembran 9 allseitig, und ist von der Messmembran 9 beabstandet.

Die Druckmessanordnung umfasst ein Anschlusselement 17, insb. ein Anschlussrohr, einen Anschlussstutzen, oder einen Anschlussflansch, auf dem der Drucksensor mittels der Befestigungsvorrichtung montiert wird. Das Anschlusselement 17 weist eine zentrale, die Messmembran 9 frei legende Ausnehmung 19 auf, über die die Messmembran 9 im Messbetrieb mit dem zu messenden Druck p beaufschlagt wird. Darüber hinaus weist das Anschlusselement 17 auf dessen der Dichtlippe 15 gegenüberliegenden Stirnseite eine zur Dichtlippe 15 des Sensorkörpers 1 komplementäre metallische Dichtungskontur 21 auf. Dichtlippe 15 und komplementäre Dichtungskontur 21 können hierzu Formgebungen aufweisen, wie sie in der Vakuumtechnik für Schneidringdichtungen verwendet werden. Zwischen der Dichtlippe 15 des Sensorkörpers 1 und der komplementären Dichtungskontur 21 des Anschlusselements 13 ist eine metallische Dichtung 23 aus einem im Vergleich zum Metall der Dichtlippe 15 und der Dichtungskontur 21 duktileren Metall eingesetzt. Hierzu eignet sich insb. eine Dichtung 23 aus Gold oder aus Kupfer. Um die Dichtwirkung der Schneidringdichtung bei extrem tiefen Temperaturen zu verbessern, ist die Dichtung 23 außenseitlich vorzugsweise mit einer Beschichtung aus Polytetrafluorethylen versehen.

Die Befestigungsvorrichtung ist derart ausgestaltet, dass sie den äußeren Rand 11 des Frontbereichs 3 des Sensorkörper 1 gegen das Anschlusselement 17 presst. Hierdurch wird bewirkt, dass die Dichtlippe 15 und die Dichtungskontur 21 in die dazwischen eingespannte metallische Dichtung 23 einschneiden.

Als ausschließlich auf den äußeren Rand 11 des Sensorkörpers 1 einwirkende Befestigungsvorrichtung eignet sich insb. ein von der Messmembran 9 abgewandten Seite her auf den Drucksensor aufgeschobener Überwurf 25, der im montierten Zustand auf einem äußeren Rand der von der Messmembran 9 abgewandten Rückseite des äußeren Randes 11 des Frontbereichs 3 aufliegt, und mit dem Anschlusselement 17 z.B. mittels einer hier durch einen Doppelpfeil angedeuteten Schraubverbindung verbindbar ist. Der Überwurf 25 ist beispielsweise eine Überwurfmutter, die auf ein Außengewinde 27 des Anschlusselements 17 aufgeschraubt wird. Diese Variante ist in der linken Hälfte von Fig. 1 dargestellt. Um den Sensorkörper 1 vor durch den Schraubvorgang ausgeübten rotatorischen Kräften zu schützen, weist die Überwurfmutter vorzugsweise einen unmittelbar auf dem Sensorkörper 1 aufliegenden Einsatz 29 auf, über den eine das Innengewinde aufweisende Hülse 31 gestülpt wird. Der Einsatz 29 besteht vorzugsweise aus dem gleichen Metall wie der Sensorkörper 1. Vorzugsweise bestehen auch die Hülse 31 und zumindest ein im montierten Zustand an den Sensorkörper 1 angrenzender Bereich des Anschlusselements 17 aus diesem Metall. Hierdurch werden durch unterschiedliche thermische Ausdehnungskoeffizienten bedingte über Temperatur entstehende Verspannungen ausgeschlossen.

Der Überwurf 25 weist eine zentrale Bohrung 33 auf, durch die hindurch der Sockel 5 verläuft, und deren Querschnittsfläche so groß ist, dass der Überwurf 25 im montierten Zustand ausschließlich auf dem äußeren Rand 11 des Frontbereichs 3 aufliegt.

Alternativ kann das Anschlusselement 17 mit einer Überwurfmutter 35 mit Innengewinde 37 ausgestattet sein, die auf einen mit einem Außengewinde ausgestatteten von der Messmembran 9 abgewandten Seite her auf den Sensorkörper 1 aufgeschobenen Überwurf 39 aufgeschraubt wird. Diese Variante ist in der rechten Hälfte der Druckmessanordnung von Fig. 1 dargestellt. Der Überwurf 39 ist - genau wie der Einsatz 29 - von der Messmembran 9 abgewandten Seite her auf den Sensorkörper 1 aufgeschoben, und weist ebenfalls eine zentrale Bohrung 33 auf, durch die hindurch der Sockel 5 verläuft, und deren Querschnittsfläche so groß ist, dass der Überwurf 39 im montierten Zustand ausschließlich auf dem äußeren Rand 11 des Frontbereichs 3 aufliegt.

Alternativ können Überwurf und Anschlusselement auch als Flansche ausgebildet sein, die mittels durch deren äußeren Ränder hindurch führenden Bolzenschrauben miteinander verschraubt sind.

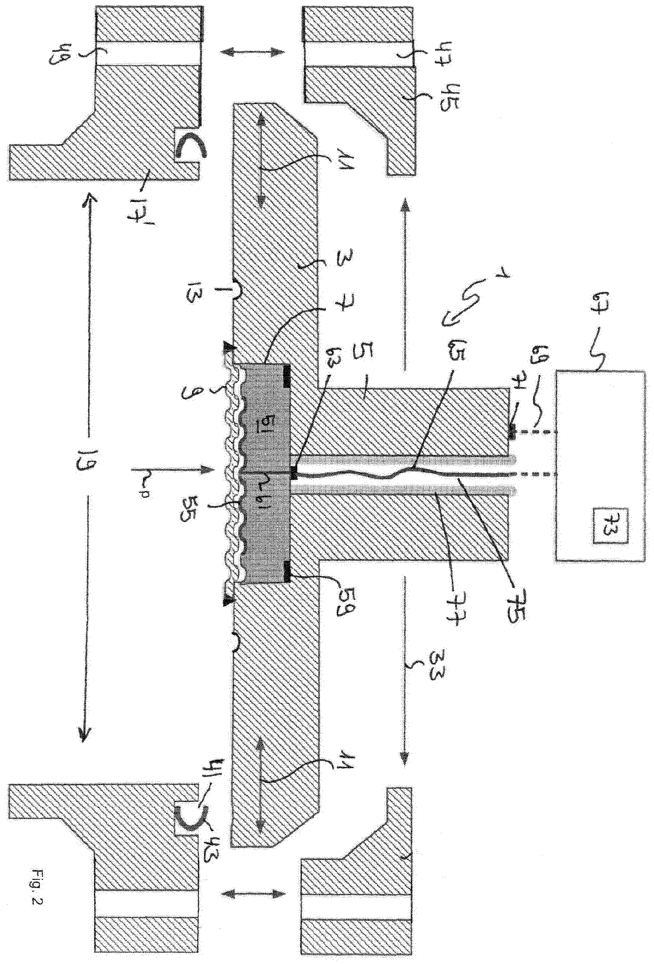

Anstelle des in der Messanordnung von Fig. 1 dargestellten druckdichten Befestigung mittels einer Schneidringdichtung, können auch andere für den Einsatz bei tiefen Temperaturen geeignete Dichtungsprinzipien eingesetzt werden. Ein Beispiel hierzu ist in Fig. 2 dargestellt. Die dort gezeigte Messanordnung umfasst einen Drucksensor, der sich von dem in Fig. 1 dargestellten Drucksensor lediglich dadurch unterscheidet, dass er keine Dichtlippe aufweist. Auch die in Fig. 2 dargestellte Druckmessanordnung umfasst ein eine zentrale, die Messmembran 9 frei legende Ausnehmung 19 aufweisendes Anschlusselement 17', auf dem der Drucksensor mittels der Befestigungsvorrichtung montiert wird. Das Anschlusselement 17' weist auf dessen, dem äußeren Rand 11 des Frontbereichs 3 gegenüberliegenden Stirnseite eine ringförmig umlaufende Nut 41 auf, in die eine ringförmig umlaufende Dichtfeder 43 aus einem federelastischen Metall eingesetzt ist. Die Dichtfeder 43 weist beispielsweise ein im Schnitt c-förmiges Profil auf, und ragt im entspannten Zustand aus der Nut 41 heraus. Genau wie die Dichtung 23 von Fig. 1 ist auch die Dichtfeder 43 außenseitlich vorzugsweise mit einer Beschichtung aus Polytetrafluorethylen versehen.

Die Befestigungsvorrichtung ist auch hier derart ausgestaltet, dass sie den äußeren Rand 11 des Frontbereichs 3 des Sensorkörper 1 parallel zur Flächennormalen auf die Messmembran 9 gegen das Anschlusselement 17' presst. Hierdurch wird die dem Anschlusselement 17' zugewandte planare Stirnseite des äußeren Randes 11 gegen die Dichtfeder 43 gepresst. Hierdurch wird die Dichtfeder 43 gespannt und entfaltet ihre Dichtwirkung. Um in einem möglichst großen Temperaturbereich eine optimale Dichtwirkung zu bewirken, besteht die Dichtfeder 43 vorzugsweise aus einem Metall, das einen thermischen Ausdehnungskoeffizienten aufweist, der identisch zu den thermischen Ausdehnungskoeffizienten von Anschlusselement 17' und Sensorkörper 1 ist, oder diesen zumindest sehr ähnlich ist. Vorzugsweise bestehen der die Nut 41 aufweisende Bereich des Anschlusselement 17', der Sensorkörper 1 und die Dichtfeder 43 aus Titan oder einer Titanlegierung.

Die Befestigungsvorrichtung umfasst auch hier einen Überwurf 45, der im montierten Zustand ausschließlich auf dem äußeren Rand 11 des Frontbereichs 3 aufliegt, und mit dem Anschlusselement 17' mittels einer hier durch einen Doppelpfeil angedeuteten Schraubverbindung verbindbar ist. Im Unterschied zu dem in Fig. 1 dargestellten Ausführungsbeispiel sind Überwurf 45 und Anschlusselement 17' hier flanschförmig ausgebildet. Dementsprechend wird die Schraubverbindung hier durch, in Fig. 2 nicht dargestellte, Bolzenschrauben bewirkt, durch die Überwurf 45 und Anschlusselement 17' miteinander verschraubt werden. Sowohl der Überwurf 45 als auch das Anschlusselement 17' weisen hierzu auf deren äußerem Rand angeordnete durchgehende Bohrungen 47, 49 auf, durch die hindurch die Bolzenschrauben im montierten Zustand verlaufen. Alternativ kann die Verbindung von Anschlusselement 17' und Überwurf 45 auch hier mittels der in Fig. 1 dargestellten Schraubverbindungen erfolgen.

Im Messbetrieb wird die Messmembran 9 über das Anschlusselement 17 bzw. 17' dem zu messenden Druck p ausgesetzt. Dieser Druck p bewirkt eine druckabhängige elastische Verformung der Messmembran 9, die mittels des elektromechanischen Wandlers messtechnisch erfasst und in ein elektrisches Signal umgewandelt wird.

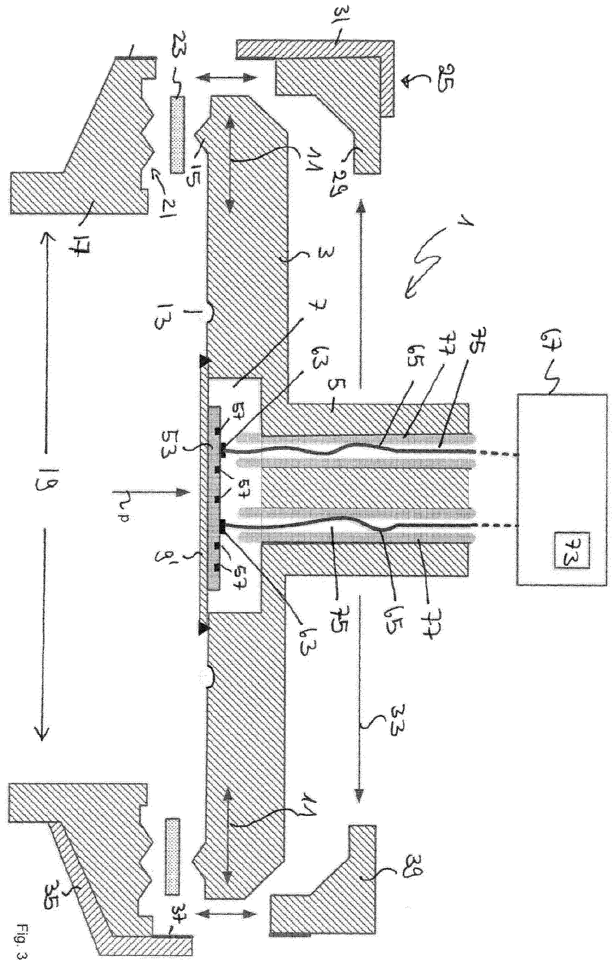

In den in Fig. 1 und Fig. 2 dargestellten Ausführungsbeispielen ist hierzu ein kapazitiver elektromechanischer Wandler vorgesehen. Fig. 3 zeigt ein alternatives Ausführungsbeispiel, bei dem ein mit Dehnungsmesselementen ausgestatteter Wandler vorgesehen ist.

Der Wandler umfasst in beiden Fällen einen Isolator 51, 53 und mindestens ein durch den Isolator 51, 53 gegenüber der metallischen Messmembran 9, 9' und dem damit über eine rein metallische Fügung elektrisch leitend verbundenen Sensorkörper 1 elektrisch isoliertes Messelement 55, 57. Der Isolator 51 bzw. 53 besteht aus einem elektrisch isolierenden Material, das in dem Temperaturbereich, in dem der Drucksensor einsetzbar ist, einen an den thermischen Ausdehnungskoeffizienten von Sensorkörper 1 und Messmembran 9, 9' angepassten thermischen Ausdehnungskoeffizienten aufweist. Hierzu wird ein Material ausgewählt, dessen thermischer Ausdehnungskoeffizient bei diesen Temperaturen dem des Metalls möglichst ähnlich ist. In Verbindung mit Titan oder Tantal, sowie Titan- oder Tantallegierungen als Werkstoff für den Sensorkörper 1 und die Messmembran 9 eignen sich hierzu Keramik und Saphir.

Titan, Tantal, sowie Titan- oder Tantallegierungen weisen bei Temperaturen im Bereich von - 165°C bis -70°C thermische Ausdehnungskoeffizienten in der Größenordnung von 8 x10⁻⁶ pro °C auf. Saphir weist in diesem Temperaturbereich einen thermische Ausdehnungskoeffizienten in der Größenordnung von 6 x10⁻⁶ pro °C auf.

Als Keramik wird vorzugsweise eine Glaskeramik aus Glimmerkristallen und Borosilikatglas eingesetzt. Ein Beispiel hierfür sind unter dem Handelsnamen MACOR von der Firma EuropTec angebotene Glaskeramiken, die Siliziumdioxid, Magnesiumoxid, Aluminiumoxid, Kaliumoxid, Boroxid und Fluor enthalten. Diese weisen im Temperaturbereich von - 200°C bis - 25° C einen thermischen Ausdehnungskoeffizienten im Bereich von 7,4 10⁻⁶ pro °C auf, und bieten darüber hinaus den Vorteil, dass sie durch spanabhebende mechanische Bearbeitung mit geringen Fertigungstoleranzen gefertigt werden können, eine hohe Oberflächengüte aufweisen, aufgrund ihrer Porenfreiheit keine Gase absondern, metallisch beschichtbar sind, und hartlötbar sind.

Saphir und Keramik sind mechanisch stabil, und bewirken auch bei Temperaturen unterhalb von
- 70°C, inb. bei Temperaturen im Bereich von
- 165°C bis - 70°C, eine gute elektrische Isolation.

Durch die Verwendung von Titan, Tantal, sowie Titan- oder Tantallegierungen für den Sensorkörper 1 und die Messmembran 9 in Verbindung mit Isolatoren 51, 53 aus Saphir oder Keramik, ist es möglich, den Drucksensor in einem Temperaturbereich von bis zu - 165°C einzusetzen.

Saphir oder Keramik können als Werkstoff für die Isolatoren 51 bzw. 53 auch in Verbindung mit Sensorkörper 1 und Messmembran 9 aus austenitischem Edelstahl eingesetzt werden. Austenitische Edelstähle weisen jedoch einen thermischen Ausdehnungskoeffizient in der Größenordnung von 16 x 10⁻⁶ pro °C auf, so dass hier eine deutlich schlechtere, den Temperaturbereich, in dem der Drucksensor einsetzbar ist, nach unten begrenzende Anpassung besteht, als bei den anderen genannten Metallen. Da Tantal und Tantallegierungen im Vergleich zu Titan und Titanlegierungen teuer sind, bestehen Messmembran 9, 9' und Sensorkörper 1 vorzugsweise aus Titan oder einer Titanlegierung und werden in Verbindung mit einem Isolator 51, 53 aus Saphir oder Keramik eingesetzt.

Bei dem in Fig. 1 dargestellten kapazitiven Wandler ist der Isolator 51 ein in die Ausnehmung 7 eingesetzter und auf deren von der Messmembran 9 abgewandten Rückseite verankerter Körper. Dieser weist eine der Messmembran 9 zugewandte Stirnseite auf, die parallel zur Messmembran 9 verläuft, und von dieser beabstandet ist. Hierzu weist der rückseitig verankerte Isolator 51 eine Bauhöhe auf, die geringer als die Höhe der Ausnehmung 7 ist.

Die Verankerung erfolgt vorzugsweise durch eine zwischen einem äußeren Rand der dem Sockel 5 zugewandten Rückseite des Isolators 37 und der diesem gegenüberliegenden durch den Sensorkörper 1 gebildeten Bodenfläche der Ausnehmung 7 bewirkte Fügung 59. Zur Fügung von Metall, insb. Titan, und Keramik oder Saphir eignet sich insb. eine Aktivhartlotverbindung. Hierzu wird bevorzugt ein ternäres Aktivhartlot, das eine Zr-Ni-Legierung und Titan aufweist, verwendet. Ein solches Aktivhartlot ist beispielsweise in der EP 0 490 807 B1 beschrieben.

Der Isolator 51 weist hierzu vorzugsweise eine entlang eines geschlossenen äußeren Randes auf dessen dem Sockel 5 zugewandten Rückseite umlaufende Ausnehmung auf, in die ein Lotring aus dem Aktivhartlot eingesetzt wird. Der Lotring wird zusammen mit dem Isolator 51 in die Ausnehmung 7 eingebracht, wo er dann in unmittelbarem Kontakt zur Bodenfläche der Ausnehmung 7 steht, und dort verlötet wird.

Die Messelemente 55 des kapazitiven Wandlers sind Elektroden, die auf der der Messmembran 9 zugewandten Stirnseite des Isolators 51 angeordnet sind. Diese sind durch deren Abstand zur Messmembran 9 gegenüber der Messmembran 9 elektrisch isoliert, und durch den Isolator 51 gegenüber dem Sensorkörper 1 elektrisch isoliert. Eines der Messelement 55 ist eine Messelektrode, die zusammen mit der als Gegenelektrode hierzu dienenden Messmembran 9 einen Kondensator bildet, der eine von der druckabhängigen Durchbiegung der Messmembran 9 abhängige Kapazität aufweist. Darüber hinaus können weitere - hier nicht dargestellte - Elektroden, z.B. Referenzelektroden, auf dem Isolator 51 vorgesehen werden. Die Messelektrode ist beispielsweise eine als metallische Beschichtung auf die Stirnfläche des Isolators 51 aufgebrachte, z.B. aufgesputterte, Elektrode. Die Elektroden bestehen vorzugsweise aus einem Metall, dessen thermischer Ausdehnungskoeffizient dem thermischen Ausdehnungskoeffizienten des Isolators 51 möglichst ähnlich ist. Da das Material des Isolators 51 in Abhängigkeit vom thermischen Ausdehnungskoeffizienten des Metalls des Sensorkörpers 1 ausgewählt wird, besteht die Elektroden vorzugsweise aus dem gleichen Metall wie der Sensorkörper 1, vorzugsweise aus Titan.

Der elektrische Anschluss der Messelemente 55 erfolgt über durch den Isolator 51 hindurch geführte Kontaktstifte 61, die jedes Messelement 55 mit einem zugehörigen auf der von der Messmembran 9 abgewandten Rückseite des Isolators 51 angeordneten Kontakt 63 verbinden. Die Kontaktstifte 61 können beispielsweise Titan- oder Tantalstifte sein. Tantal weist einen thermischen Ausdehnungskoeffizienten auf der dem von Titan und des Isolators 51 sehr ähnlich ist.

Jeder Kontakt 63 ist über eine elektrische Anschlussleitung 65 mit einer entfernt von der Messmembran 9 angeordneten Elektronik 67 verbunden, die im Messbetrieb anhand der vom Wandler messtechnisch erfassten druckabhängigen Durchbiegung der Messmembran 9, 9' den zu messenden Druck p bestimmt, und diesen anzeigt, oder in Form eines entsprechenden Ausgangssignals zur Verfügung stellt. Hierzu sind die Anschlussleitungen 65 z.B. mittels einer Weichlötung oder durch Bonden an die Kontakte 63
angeschlossen.

Bei dem in Fig. 1 dargestellten Ausführungsbeispiel ist darüber hinaus ein elektrischer Anschluss 69 der durch die Messmembran 9 gebildeten Gegenelektrode an die Elektronik 67 vorzusehen. Da die metallische Messmembran 9 elektrisch leitend mit dem metallischen Sensorkörper 1 verbunden ist, erfolgt der Anschluss 69 der Gegenelektrode z.B. über einen auf einer von der Messmembran 9 abgewandten Stirnseite des Sockels 5 aufgebrachten Kontakt 71.

Die Elektronik 67 ist, soweit dies aufgrund der Gegebenheiten am Einsatzort und der dadurch bedingten erforderlichen Länge der Anschlussleitungen 65 möglich ist, soweit entfernt von der Messmembran 9, 9' anzuordnen, dass sie sich am Einsatzort an einem für den Betrieb der Elektronik 67 ausreichend warmen Ort befindet. Elektroniken sind typischer Weise nur bei Temperaturen oberhalb von - 40°C einsetzbar. Die Leitungslänge der Anschlussleitungen 65 von ohne unmittelbar am Wandler angeordneten Vorortelektroniken betriebenen Wandlern ist typischer Weise auf Längen in der Größenordnung von 10 cm begrenzt. Geht man von einem Temperaturgefälle entlang der Anschlussleitungen 65 von 10°C/cm aus, kann die Messmembran 9, 9' bei einer Leitungslänge von 10 cm also Temperaturen oberhalb von - 140°C ausgesetzt werden. Um den Drucksensor auch bei geringeren Temperaturgefällen, geringeren Leitungslängen, oder tieferen an der Messmembran 9, 9' anliegenden Temperaturen einsetzen zu können, wird die Elektronik 67 vorzugsweise mit einer Heizung 73 ausgestattet.

Im Sensorkörper 1 ist für jede Anschlussleitung 65 eine durch den Sockel 5 hindurch zur Ausnehmung 7 führende Bohrung 75 vorgesehen, in der die jeweilige Anschlussleitung 65 zum zugehörigen Kontakt 63 verläuft. Zur elektrischen Isolation der Anschlussleitungen 65 gegenüber dem Sensorkörper 1 ist jede Bohrung 75 mit einem Röhrchen 77 aus einem elektrisch isolierenden Material ausgekleidet. Die Röhrchen 77 bestehen vorzugsweise aus einem Material, das einen an den thermischen Ausdehnungskoeffizienten des Metalls des Sensorkörpers 1 angepassten thermischen Ausdehnungskoeffizienten aufweist. Vorzugsweise wird hierzu der gleichen Werkstoff verwendet wie für den Isolator 51 bzw. 53.

Während die Messmembran zur Messung niedrigerer Drücke, z.B. in der Größenordnung von 10 bar, vorzugsweise als planare Messmembran ausgebildet ist, wird die Messmembran 9 zur Messung in höheren Druckmessbereichen, z.B. zur Messung von Drücken in der Größenordnung von bis zu 100 bar vorzugsweise als Wellmembran ausgebildet. Diese Variante in in Fig. 1 dargestellt. Hierzu weist der die Ausnehmung 7 überdeckende vorzugsweise kreisscheibenförmige Bereich der Messmembran 9 ein Wellenprofil aus konzentrisch zur Mitte der Messmembran 9 angeordneten Wellen auf. Eine Wellmembran bietet bei hohen Drücken den Vorteil, dass sie steifer als eine scheibenförmige Membran gleicher Materialstärke ist, und die druckabhängige Durchbiegung einer Wellmembran eine linearere Abhängigkeit vom darauf einwirkenden Druck p aufweist als eine scheibenförmige Messmembran.

In dem Fall ist die der Wellmembran zugewandte Stirnseite des Isolators 51 vorzugsweise als Membranbett für die Wellmembran ausgebildet, durch das die Messmembran 9 im Falle einer darauf einwirkenden Überlast abgestützt wird. Hierzu weist die der Messmembran 9 zugewandte Stirnseite des Isolators 51 das gleiche Wellenprofil auf, wie die darüber angeordnete Messmembran 9.

Das Wellenprofil der Messmembran 9 wird vorzugsweise derart erzeugt, dass eine planare Metallscheibe aus dem Material der Messmembran 9 auf die Frontseite des Sensorkörpers 1 aufgeschweißt wird, und dort mindestens einmal auf dem Wellenprofil des Isolators 51 abgeprägt wird. Hierzu wird die Metallscheibe mit einem Druck beaufschlagt, der kontinuierlich bis zu einem Prägedruck ansteigt, bei dem die Metallscheibe die Form des Isolators 51 aufgeprägt wird, und dann für eine Zeitraum auf diesem Prägedruck gehalten wird. Sobald die Messmembran 9 nachfolgend nicht mehr mit dem Prägedruck beaufschlagt ist, springt die geprägte Messmembran 9 aufgrund der ihr eigenen Rückstellkraft aus dem Membranbett in eine vom Isolator 51 beabstandete Lage.

Die in Fig. 3 dargestellte Druckmessanordnung unterscheidet sich von dem in Fig. 1 dargestellten Ausführungsbeispiel lediglich durch die Ausführungsform des elektromechanischen Wandlers und die Formgebung der Messmembran 9'. Im Unterschied zu den vorherigen Ausführungsbeispielen ist der Isolator 53 des Wandlers hier unmittelbar auf einer in die Ausnehmung 7 hinein weisenden Innenseite der Messmembran 9' aufgebracht.

Dabei sind in den Isolator 53 auf dessen von der Messmembran 9' abgewandten Seite Messelemente 57 eingebracht. Die Messelemente 57 sind beispielsweise Dehnungswiderstände, insb. piezoresistive Elemente, die beispielsweise zu einer Widerstandsmessbrücke zusammen geschaltet sind.
Hierzu können aus der Silicon on Saphire Technologie bekannte Wandler-Chips mit einem Saphirträger und darin eingeschlossenen Silizium-Sensoren eingesetzt werden. Saphir weist eine zu der Kristallstruktur von Silizium kompatible Kristallstruktur auf, und gewährleistet auch bei tiefen Temperaturen eine gute Isolation der eingeschlossenen Silizium-Sensoren.

Dabei bildet der Saphirträger den hier scheibenförmigen Isolator 53, durch den die Messelemente 57 gegenüber der Messmembran 9' isoliert sind. Die Isolation der Messelemente 57 gegenüber dem Sensorkörper 1 erfolgt dadurch, dass diese in der Ausnehmung 7 vom Material des Sensorkörpers 1 beabstandet angeordnet sind. Der elektrische Anschluss des Wandlers erfolgt auch hier über Anschlussleitungen 65, die an auf der von der Messmembran 9' abgewandten Seite des Isolators 53 angeordnete Kontakte 63 angeschlossen sind. Die Anschlussleitungen 65 führen auch hier durch mit Röhrchen 77 aus einem Isolator ausgekleidete, durch den Sensorkörper 1 verlaufende Bohrungen 75. Im Unterschied zu dem vorherigen Ausführungsbeispiel ragen die Röhrchen 77 hier jedoch vorzugsweise in die Ausnehmung 7 hinein.

Um eine optimale Übertragung der druckabhängigen Durchbiegung der Messmembran 9' auf die in den Isolator 53 eingebrachten Messelemente 57 zu bewirken, ist der scheibenförmige Isolator 53 vorzugsweise flächig mit der Messmembran 9' verbunden. Hierzu ist die Messmembran 9' vorzugsweise als planare Metallscheibe ausgebildet. Die flächige Verbindung wird beispielsweise durch eine Hartlötung bewirkt.

Der auf der Messmembran 9' aufgebrachte Isolator 53 bewirkt eine Versteifung der Messmembran 9'. Entsprechend wird der in Fig. 3 dargestellte Drucksensor bevorzugt zur Messung höherer Drücke p eingesetzt. Alternativ kann die Versteifung durch die Wahl eines eine höhere prozentuale Dehnung ε aufweisenden Materials für die Messmembran 9' kompensiert werden. Da die prozentuale Dehnung ε mit sinkender Temperatur abnimmt, bedeutet dies jedoch regelmäßig einen Anstieg der Untergrenze des Temperaturbereichs, in dem dieser Drucksensor einsetzbar ist.
- 1: Sensorkörper
- 3: Frontbereich
- 5: Sockel
- 7: Ausnehmung
- 9, 9': Messmembran
- 11: Rand
- 13: Nut
- 15: Dichtlippe
- 17: Anschlusselement
- 19: Ausnehmung
- 21: Dichtungskontur
- 23: Dichtung
- 25: Überwurf
- 27: Außengewinde
- 29: Einsatz
- 31: Hülse
- 33: Bohrung
- 35: Überwurfmutter
- 37: Innengewinde
- 39: Überwurf
- 41: Nut
- 43: Dichtfeder
- 45: Überwurf
- 47: Bohrung
- 49: Bohrung
- 51: Isolator
- 53: Isolator
- 55: Messelement
- 57: Messelement
- 59: Fügung
- 61: Kontaktstift
- 63: Kontakt
- 65: Anschlussleitung
- 67: Elektronik
- 69: Anschluss
- 71: Kontakt
- 73: Heizung
- 75: Bohrung
- 77: Röhrchen

## Patentansprüche

1. Drucksensor, mit
- einem massiven metallischen Sensorkörper (1), mit einem Frontbereich (3) und einen daran anschließenden Sockel (5),
-- dessen Frontbereich (3) eine größere Querschnittsfläche aufweist als der Sockel (5), und
-- dessen Frontbereich (3) einen äußeren zur Montage des Drucksensors an einem Einsatzort mittels einer Befestigungsvorrichtung einspannbaren äußeren Rand (11) aufweist,
- einer im Frontbereich (3) vorgesehenen, zu einer vom Sockel (5) abgewandten Frontseite des Frontbereichs (3) hin geöffneten Ausnehmung (7),
- einer im Messbetrieb von außen mit einem zu messenden Druck (p) zu beaufschlagenden, druckabhängig elastisch verformbaren, auf der Frontseite des Sensorkörpers (1) angeordneten, die Ausnehmung (7) nach außen abschließenden metallischen Messmembran (9, 9'),
-- die aus dem gleichen Metall besteht wie der Sensorkörper (1), und
-- die vom äußeren Rand (11) des Frontbereichs (3) beabstandet ist, und
- einem elektromechanischen Wandler zur messtechnischen Erfassung der druckabhängigen Verformung der Messmembran (9, 9'), mit mindestens einem durch einen Isolator (51, 53) elektrisch gegenüber der Messmembran (9, 9') und dem Sensorkörper (1) isolierten Messelement (55, 57),
**dadurch gekennzeichnet, dass**
- der Isolator (51) ein in die Ausnehmung (7) eingesetzter, insb. ein mittels einer Aktivhartlotverbindung (59) in der Ausnehmung (7) verankerter, Körper ist, dessen der Messmembran (9) zugewandte Stirnseite parallel zur Messmembran (9) verläuft, und von dieser beabstandet ist, und
- eines der Messelemente (55) eine auf der Stirnseite des Isolators (51) aufgebrachte Messelektrode ist, die zusammen mit der als Gegenelektrode dienenden Messmembran (9) einen Kondensator bildet, der eine von der druckabhängigen Durchbiegung der Messmembran (9) abhängige Kapazität aufweist.

2. Drucksensor nach Anspruch 1, bei dem auf der Frontseite des
Sensorkörpers (1) zwischen der Messmembran (9, 9') und dem äußeren Rand (11) eine die Messmembran (9, 9') allseitig umschließende Nut (13) vorgesehen ist.

3. Drucksensor nach Anspruch 1, bei dem der Frontbereich (3) auf der
Frontseite des äußeren Randes (11) eine die Messmembran (9, 9') allseitig umschließende, von der Messmembran (9, 9') beabstandete, und nach außen vorstehende metallische Dichtlippe (15) einer metallischen Schneidringdichtung aufweist.

4. Drucksensor nach Anspruch 1, bei dem die Messmembran (9, 9') aus
einem Metall, insb. aus Titan, Tantal, einer Titanlegierung oder einer Tantallegierung, besteht, das in einem Temperaturen unterhalb von - 70°C umfassenden Temperaturbereich, in dem der Drucksensor einsetzbar ist, insb. einem Temperaturbereich von - 165°C bis - 70°C, eine prozentuale Dehnung (ε) größer gleich 10% aufweist.

5. Drucksensor nach Anspruch 1 oder 4, bei dem der Isolator (51, 53) aus
einem Material, insb. aus Keramik oder aus Saphir, besteht, das in einem Temperaturen unterhalb von - 70°C umfassenden Temperaturbereich, in dem der Drucksensor einsetzbar ist, insb. einem Temperaturbereich von
- 165°C bis - 70°C, einen an den thermischen Ausdehnungskoeffizienten des Metalls von Sensorkörper (1) und Messmembran (9, 9') angepassten thermischen Ausdehnungskoeffizienten aufweist.

6. Drucksensor nach Anspruch 1, bei dem
- der Isolator (51) auf dessen der Messmembran (9) zugewandten Stirnseite ein ein Membranbett für die Messmembran (9) bildendes Wellenprofil aus konzentrisch zur Mitte der Messmembran (9) angeordneten Wellen aufweist, und
- die Messmembran (9) als Wellmembran ausgebildet ist, die ein zum Wellenprofil des Isolators (51) formgleiches, insb. durch Abprägen der Messmembran (9) auf dem Membranbett hergestelltes, Wellenprofil aufweist.

7. Drucksensor nach Anspruch 1, bei dem
- der Isolator (53) eine auf einer in die Ausnehmung hineinweisenden Innenseite der Messmembran (9') angeordnete flächig mit der Messmembran (9') verbundene Scheibe ist, und
- die Messelemente (57) auf der von der Messmembran (9') abgewandten Seite des Isolators (53) in den Isolator (53) eingesetzte Sensoren, insb. piezoresistive Silizium-Sensoren, sind.

8. Drucksensor nach Anspruch 7, bei dem
- der Isolator (53) aus Saphir besteht, und
- die flächige Verbindung von Isolator (53) und Messmembran (9') eine Hartlotverbindung ist.

9. Drucksensor nach Anspruch 1, bei dem
- auf der von der Messmembran (9, 9') abgewandten Seite des Isolators (51, 53) mindestens ein an mindestens eines der Messelemente (55, 57) angeschlossener Kontakt (63) vorgesehen ist,
- an jeden Kontakt (63) eine Anschlussleitung (65) angeschlossen ist,
- im Sensorkörper (1) für jede Anschlussleitung (65) eine durch den Sockel (5) verlaufende in der Ausnehmung (7) mündende Bohrung (75) vorgesehen ist,
- in jede Bohrung (75) ein die Bohrung (75) auskleidendes Röhrchen (77) aus einem Isolator, insb. aus Keramik oder aus Saphir, eingesetzt ist, und
- jede Anschlussleitung (65) durch eines der Röhrchen (77) hindurch geführt ist.

10. Drucksensor nach Anspruch 9, bei dem
die Anschlussleitungen (65) jeweils mittels einer Weichlötung oder durch Bonden an den zugehörigen Kontakt (63) angeschlossen sind.

11. Drucksensor nach Anspruch 1, bei dem
der elektromechanische Wandler über mindestens eine Anschlussleitung (65) an eine von der Messmembran (9, 9') entfernt angeordnete Elektronik (67), insb. eine mit einer Heizung (73) ausgestattete Elektronik (67), angeschlossen ist.

12. Druckmessanordnung mit einem Drucksensor gemäß einem der vorangehenden Ansprüche, mit
- einem Anschlusselement (17, 17'), insb. einem Anschlussrohr, einem Anschlussstutzen oder einem Anschlussflansch,
-- das eine zentrale, die Messmembran (9, 9') frei gebende Ausnehmung (19) aufweist, und
- einer Befestigungsvorrichtung zur Befestigung des Drucksensors auf dem Anschlusselement (17, 17'),
-- die ausschließlich auf dem äußeren Rand (11) des Frontbereichs(3) des Drucksensors aufliegt, und insb. ausschließlich parallel zur Flächennormale auf die Messmembran (9, 9') wirkende Kräfte auf den Rand (11) ausübt.

13. Druckmessanordnung nach Anspruch 12 mit einem Drucksensor gemäß Anspruch 3, bei der
- das Anschlusselement (17) in einem der Dichtlippe (15) gegenüberliegenden Bereich eine zur Dichtlippe (11) des Sensorkörpers (1) komplementäre metallische Dichtungskontur (21) aufweist,
- zwischen der Dichtlippe (15) und der Dichtungskontur (21) eine metallische Dichtung (17), insb. eine außenseitlich mit einer Beschichtung aus Polytetrafluorethylen beschichtete Dichtung (23), aus einem im Vergleich zum Metall der Dichtlippe (15) und der Dichtungskontur (21) duktileren Metall, insb. aus Gold oder aus Kupfer, angeordnet ist, und
- die Befestigungsvorrichtung einen von der Messmembran (9, 9') abgewandten Seite her auf den Drucksensor aufgeschobenen Überwurf (25, 39) aufweist, der mit dem Anschlusselement (17) mittels einer Schraubverbindung verbunden ist.

14. Druckmessanordnung nach Anspruch 12, bei der
- das Anschlusselement (17') auf dessen dem äußeren Rand (11) gegenüberliegenden Stirnseite eine ringförmig umlaufende Nut (41) aufweist, und
- in der Nut (41) eine ringförmig umlaufende Dichtfeder (43), insb. eine Dichtfeder (43) mit einem im Schnitt c-förmigen Profil, aus einem federelastischen Metall, insb. einem außenseitlich mit einer Beschichtung aus Polytetrafluorethylen beschichten Metall, eingesetzt ist, und
- die Befestigungsvorrichtung einen von der Messmembran (9, 9') abgewandten Seite her auf den Drucksensor aufgeschobenen Überwurf (45) aufweist, der mit dem Anschlusselement (45) mittels einer Schraubverbindung verbunden ist.

## Claims

1. Pressure sensor, with
- a solid metal sensor body (1), with a front area (3) and a base (5) following on from said front area,
-- wherein the front area (3) has a larger cross-sectional area than the base (5), and
- wherein the front area (3) has an exterior edge (11) which can be clamped with a fastening unit for the purpose of mounting the pressure sensor at a place of operation,
- a recess (7) provided in the front area (3) and open towards a front side of the front area (3) that faces away from the base (5),
- a metal measuring membrane (9, 9'), which can be deformed in an elastic manner depending on the pressure, said membrane being subjected, during operation, from the outside to a pressure to be measured (p), being arranged on the front side of the sensor body (1) and sealing the recess (7) towards the outside,
-- wherein said membrane is made from the same metal as the sensor body (1) and
-- wherein said membrane is at a distance from the outer edge (11) of the front area (3), and
- an electromechanical transducer to record the pressure-dependent deformation of the measuring membrane (9, 9'), with at least one measuring element (55, 57) electrically isolated from the measuring membrane (9, 9') and the sensor body (1) by means of an isolator (51, 53),
**characterized in that**
- the isolator (51) is a body introduced in the recess (7), particularly a body anchored in the recess (7) by means of an active brazing solder connection (59), wherein the front face of the body facing towards the measuring membrane (9) is parallel to the measuring membrane (9) and is located at a distance from said membrane, and
- one of the measuring elements (55) is a measuring electrode fitted on the front face of the isolator (51), wherein said electrode forms a capacitor together with the measuring membrane (9) that serves as a counter-electrode, said capacitor having a capacity that depends on the pressure-dependent deflection of the measuring membrane (9).

2. Pressure sensor as claimed in Claim 1, wherein a groove (13) is provided on the front side of the sensor body (1), between the measuring membrane (9, 9') and the outer edge (11), said groove surrounding the measuring membrane (9, 9') on all sides.

3. Pressure sensor as claimed in Claim 1, wherein the front area (3) on the front side of the outer edge (11) has a metal sealing lip (15) of a metal cutting ring sealing, said lip surrounding the measuring membrane (9, 9') on all sides, being located at a distance from the measuring membrane (9, 9') and protruding outwards.

4. Pressure sensor as claimed in Claim 1, wherein the measuring membrane (9, 9') is made from a metal, particularly titanium, tantalum, a titanium alloy or a tantalum alloy, which has a percentage expansion (ε) greater or equal to 10 % in a temperature range in which the pressure sensor can be used, said temperature range comprising temperatures below - 70 °C, particularly a temperature range from - 165 °C to - 70 °C.

5. Pressure sensor as claimed in Claim 1 or 4, wherein the isolator (51, 53) is made from a material, particularly ceramic or sapphire, said material having a thermal expansion coefficient in a temperature range in which the pressure sensor can be used, said temperature range comprising temperatures below - 70 °C, particularly a temperature range from - 165 °C to - 70 °C, wherein said thermal expansion coefficient is adapted to the thermal expansion coefficient of the metal of the sensor body (1) and the measuring membrane (9, 9').

6. Pressure sensor as claimed in Claim 1, wherein
- the isolator (51) has a corrugated profile of corrugations arranged concentrically to the center of the measuring membrane (9), said profile forming a membrane bed for the measuring membrane (9) and being located on the front face of the isolator facing towards the measuring membrane (9); and
- the measuring membrane (9) is designed as a corrugated membrane, which has a corrugated profile that is identical in design to the corrugated profile of the isolator (51) and is formed, in particular, by impressing the measuring membrane (9) on the membrane bed.

7. Pressure sensor as claimed in Claim 1, wherein
- the isolator (53) is a disk which is connected over a surface area to the measuring membrane (9') and arranged on an inside of the measuring membrane (9) that projects into the recess, and
- the measuring elements (57) on the side of the isolator (53) facing away from the measuring membrane (9') are sensors that are inserted into the isolator (53), particularly piezoresistive silicon sensors.

8. Pressure sensor as claimed in Claim 7, wherein
- the isolator (53) is made from sapphire, and
- the surface connection between the isolator (53) and the measuring membrane (9') is a hard solder connection.

9. Pressure sensor as claimed in Claim 1, wherein
- at least one contact (63), which is connected to at least one of the measuring elements (55, 57), is provided on the side of the isolator (51, 53) facing away from the measuring membrane (9, 9'),
- a connecting cable (65) is connected to each contact (63),
- a bore (75) running though the base (5) and entering into the recess (7) is provided in the sensor body (1) for every connecting cable (1),
- a small tube (77) that lines the bore (75) is inserted into each bore (75), said tube being an isolator, particularly made from ceramic or sapphire, and
- each connecting cable (65) is guided through one of the small tubes (77).

10. Pressure sensor as claimed in Claim 9, wherein
the connecting cables (65) are each connected to the corresponding contact (63) by means of a soft-soldering or by bonding.

11. Pressure sensor as claimed in Claim 1, wherein
the electromechanical transducer is connected to an electronics unit (67), which is arranged at a distance from the measuring membrane (9, 9'), via at least one connecting cable (65), particularly an electronics unit (67) fitted with a heating system (73).

12. Pressure measurement arrangement with a pressure sensor as claimed in one of the previous claims, with
- a connection element (17, 17'), particularly a connection tube, a connection nozzle or a connection flange,
-- which has a central recess (19) that exposes the measuring membrane (9, 9'), and
- a fastening unit to secure the pressure sensor on the connection element (17, 17'),
-- which rests exclusively on the outer edge (11) of the front area (3) of the pressure sensor, and which exerts forces on the edge (11) that act on the measuring membrane (9, 9'), particularly exclusively parallel to the surface normal.

13. Pressure measurement arrangement as claimed in Claim 12 with a pressure sensor as claimed in Claim 3, wherein
- the connection element (17) has a metal sealing contour in an area opposite the sealing lip (15), said contour being complementary to the sealing lip (11) of the sensor body (1),
- a metal seal (17) is arranged between the sealing lip (15) and the sealing contour (21), particularly a seal (23) coated with a polytetrafluorethylene coating on the outside, said seal being made from a metal that is more ductile than the metal of the sealing lip (15) and sealing contour (21), particularly made from gold or copper, and
- the fastening unit has a collar (25, 39) that is pushed onto the pressure sensor from the side facing away from the measuring membrane (9, 9'), said collar being connected to the connection element (17) by means of a screw connection.

14. Pressure measurement arrangement as claimed in Claim 12, wherein
- the connection element (17) has a groove (41), round in circumference, on its front face that is opposite the outer edge (11), and
- a sealing spring (43), round in circumference, is inserted in the groove (41), particularly a sealing spring (43) with a c-shaped profile, made from resilient metal, particularly a metal coated with a polytetrafluorethylene coating on the outside, and
- the fastening unit has a collar (45) that is pushed onto the pressure sensor from the side facing away from the measuring membrane (9, 9'), said collar being connected to the connection element (17) by means of a screw connection.

## Revendications

1. Capteur de pression, avec
- un corps de capteur (1) métallique massif, avec une zone frontale (3) et un socle (5) s'y raccordant,
-- dont la zone frontale (3) présente une section transversale supérieure à celle du socle (5), et
- dont la zone frontale (3) présente un bord extérieur (11) pouvant être serré, en un emplacement situé en dehors de l'espace de montage du capteur de pression, à l'aide d'un dispositif de fixation,
- un évidement (7) prévu dans la zone frontale (3), lequel évidement est ouvert en direction d'une face frontale de la zone frontale (3) située à l'opposé du socle (5),
- une membrane de mesure (9, 9') métallique, déformable en mode de mesure, élastiquement de l'extérieur en fonction de la pression, laquelle membrane est soumise à la pression à mesurer (p), est disposée sur la face frontale du corps de capteur (1) et ferme l'évidement (7) vers l'extérieur,
-- laquelle membrane est constituée du même métal que le corps de capteur (1) et
-- laquelle membrane est espacée du bord extérieur (11) de la zone frontale (3), et
- un convertisseur électromécanique destiné, dans le cadre de la mesure, à la détection de la déformation fonction de la pression de la membrane de mesure (9, 9'), avec au moins un élément de mesure (55, 57) isolé électriquement par un isolateur (51, 53) par rapport à la membrane de mesure (9, 9') et au corps de capteur (1),
**caractérisé en ce que**
- l'isolateur (51) est un corps introduit dans l'évidement (7), notamment un corps ancré dans l'évidement (7) au moyen d'un assemblage par brasure active (59), corps dont la face frontale faisant face à la membrane de mesure (9) est parallèle à la membrane de mesure (9), et est espacé de celle-ci, et
- l'un des éléments de mesure (55) est une électrode de mesure placée sur la face frontale de l'isolateur (51), laquelle électrode forme, conjointement avec la membrane de mesure (9) servant de contre-électrode, un condensateur, lequel présente une capacité dépendant de la flèche fonction de la pression de la membrane de mesure (9).

2. Capteur de pression selon la revendication 1, pour lequel est prévue sur la face frontale du corps de capteur (1), entre la membrane de mesure (9, 9') et le bord extérieur (11), une rainure entourant sur tous les côtés la membrane de mesure (9, 9').

3. Capteur de pression selon la revendication 1, pour lequel la zone frontale (3) présente, sur la face frontale du bord extérieur (11), une lèvre d'étanchéité métallique (15) d'un joint à bague coupante métallique, entourant sur tous les côtés la membrane de mesure (9, 9'), laquelle lèvre est espacée de la membrane de mesure (9, 9') et fait saillie vers l'extérieur.

4. Capteur de pression selon la revendication 1, pour lequel la membrane de mesure (9, 9') est en métal, notamment en titane, tantale, un alliage de titane ou un alliage de tantale, lequel métal présente, dans une plage de température comprenant des températures inférieures à - 70 °C dans laquelle le capteur est utilisable, notamment dans une plage de température de - 165 °C à - 70 °C, un pourcentage d'allongement (ε) supérieur ou égal à 10 %.

5. Capteur de pression selon la revendication 1 ou 4, pour lequel l'isolateur (51, 53) est constitué d'un matériau, notamment de céramique ou de saphir, lequel matériau présente, dans une plage de température comprenant des températures inférieures à - 70 °C dans laquelle le capteur est utilisable, notamment dans une plage de température de - 165 °C à - 70 °C, un coefficient de dilatation thermique adapté au coefficient de dilatation thermique du métal du corps de capteur (1) et de la membrane de mesure (9, 9').

6. Capteur de pression selon la revendication 1, pour lequel
- l'isolateur (51) présente, sur son côté frontal faisant face à la membrane de mesure (9), un profil ondulé constitué de cannelures disposées au centre de la membrane de mesure (9), formant un lit de membrane pour la membrane de mesure (9) ; et
- la membrane de mesure (9) est formée en tant que membrane ondulée, qui présente un profil ondulé de forme identique au profil ondulé de l'isolateur (51), lequel profil ondulé est notamment fabriqué par estampage de la membrane de mesure (9) sur le lit de membrane.

7. Capteur de pression selon la revendication 1, pour lequel
- l'isolateur (53) est un disque relié sur toute sa surface avec la membrane de mesure (9'), lequel disque est disposé sur le côté intérieur pointant dans l'évidement de la membrane de mesure (9'), et
- les éléments de mesure (57) situés sur le côté opposé à la membrane de mesure (9') de l'isolateur (53) sont des capteurs insérés dans l'isolateur (53), notamment des capteurs en silicium piézorésistif.

8. Capteur de pression selon la revendication 7, pour lequel
- l'isolateur (53) est en saphir, et
- la liaison sur toute la surface entre l'isolateur (53) et la membrane de mesure (9') est une liaison par brasure active.

9. Capteur de pression selon la revendication 1, pour lequel
- est prévu, sur le côté opposé à la membrane de mesure (9, 9') de l'isolateur (51, 53), au moins un contact (63) raccordé à au moins l'un des éléments de mesure (55, 57),
- une ligne de raccordement (65) est raccordée à chaque contact (63),
- est prévu, dans le corps de capteur (1) pour chaque ligne de raccordement (65), un perçage (75) débouchant dans l'évidement (7) s'étendant à travers le socle (5),
- un petit tube (77) revêtant le perçage (75) est inséré dans chaque perçage (75) à partir d'un isolateur, lequel petit tube est notamment en céramique ou en saphir, et
- chaque ligne de raccordement (65) étant guidé à travers l'un des petits tubes (77).

10. Capteur de pression selon la revendication 9, pour lequel
les lignes de raccordement (65) sont chacune raccordées au moyen d'une brasure tendre ou par collage au contact (63) correspondant.

11. Capteur de pression selon la revendication 1, pour lequel
le convertisseur électromécanique est raccordé via au moins une ligne de raccordement (65) à une électronique (67) disposée à distance de la membrane de mesure (9, 9'), notamment une électronique (67) équipée d'un chauffage (73).

12. Arrangement de mesure de pression avec un capteur de pression selon l'une des
revendications précédentes, avec
- un élément de raccordement (17, 17'), notamment un tube de raccordement, une tubulure de raccordement ou une bride de raccordement,
-- qui présente un évidement (19) central, libérant la membrane de mesure (9, 9'), et
- un dispositif de fixation destiné à la fixation du capteur de pression sur l'élément de raccordement (17, 17'),
-- qui repose exclusivement sur le bord extérieur (11) de la zone frontale (3) du capteur de pression, et qui exerce, notamment exclusivement parallèlement à la normale à la surface de la membrane de mesure (9, 9'), des forces axiales sur le bord (11).

13. Arrangement de mesure de pression selon la revendication 12 avec un capteur de pression selon la revendication 3, pour lequel
- l'élément de raccordement (17) présente dans une zone opposée à la lèvre d'étanchéité (15) un contour d'étanchéité (21) métallique complémentaire à la lèvre d'étanchéité (11) du corps de capteur (1),
- est disposé, entre la lèvre d'étanchéité (15) et le contour d'étanchéité (21) un joint métallique (17), notamment un joint (23) muni à l'extérieur d'un revêtement en polytétrafluoréthylène, lequel joint est constitué d'un métal d'une ductilité supérieure à celle du métal de la lèvre d'étanchéité (15) et du contour d'étanchéité (21), notamment en or ou en cuivre, et
- le dispositif de fixation présente, sur le côté opposé à la membrane de mesure (9, 9'), une calotte (25, 39) engagée sur le capteur de pression, laquelle calotte est reliée avec l'élément de raccordement (17) au moyen d'un assemblage vissé.

14. Arrangement de mesure de pression selon la revendication 12, pour lequel
- l'élément de raccordement (17) présente, sur sa face frontale opposée au bord extérieur (11), une rainure (41) annulaire périphérique, et
- est inséré, dans la rainure (41), un ressort d'étanchéité (43) annulaire périphérique, notamment un ressort d'étanchéité (43) avec un profil présentant en coupe une forme en C, lequel ressort est constitué d'un métal élastique, notamment d'un métal muni à l'extérieur d'un revêtement en polytétrafluoréthylène, et
- le dispositif de fixation présente, sur le côté opposé à la membrane de mesure (9, 9'), une calotte (45) engagée sur le capteur de pression, laquelle calotte est reliée avec l'élément de raccordement (17) au moyen d'un assemblage vissé.
